# EUROPEAN PATENT APPLICATION

(11) **EP 0 779 606 A1**
(43) Date of publication of application: **18.06.1997**
(21) Application number: 96309099.8
(22) Date of filing: 13.12.1996
(51) Int. Cl.: G08B 17/06, G01K 1/02

(54) **Thatch temperature monitor**

(30) Priority: 15.12.1995 GB 9525627
(71) Applicant: CGA Direct (Insurance Brokers) Limited, Horsham, W Sussex RH12 1SL (GB)
(72) Inventor: The designation of the inventor has not yet been filed
(74) Representative: Lomas, Geoffrey Michael

(57) **Abstract**

A temperature monitoring system 1 for a thatched roof 2 comprises a plurality of temperature sensors 3 located within the thatch 2¹.

The sensors 3 are inserted through the lower surface of the thatched roof until the end 4 has reached the centre of the thatch. The sensor ends 4 are located about six inches from the chimney wall 8, as heat transferred from the chimney has been found to be the cause of a number of thatched roof fires.

The temperature monitoring system also comprises a monitoring unit 5 comprising an alarm indication means in the form of light-emitting diodes (LED) 6 and an audible alarm 6¹ and also a sensor malfunction indication means in the form of LEDs 7. The monitoring unit 5 has an electrical connection with the temperature sensitive resistors, which are located inside the sensor 3, via two wires 9. The monitoring unit 5 is located within the house.

## Description

The present invention relates to temperature monitoring systems and particularly, but not limited to, a temperature monitoring device for thatched roofs.

We have found that thatch roof fires cause a particular problem for the Fire Brigade. Due to the construction of a thatched roof a fire may burn for some time without displaying any visible signs such as flames or smoke.

Once the visible signs do appear and the Fire Brigade is called, the exact location of the heart of the fire is not obvious and it is necessary to remove the majority of the thatch to ensure the fire has been completely extinguished.

The present invention seeks to overcome this problem by providing a temperature monitoring device which will indicate the areas of the roof affected by a fire.

The system will also provide early detection of an excessive temperature rise within the thatch so helping to prevent a fire.

According to one aspect of the invention there is provided a temperature monitoring system for a thatched roof comprising a plurality of temperature sensors disposed at spaced-apart locations of the thatch and being linked to a monitoring unit comprising respective indication means to indicate the temperature change of a respective sensor or group of sensors, the indication means being activated by a signal from an associated temperature sensor.

Preferably the indication means is activated when the respective sensor detects a predetermined critical threshold temperature.

Thus there may be a separate indication means for each sensor to indicate whether an excess temperature has been detected by that sensor, or there may be two or more sensors connected to an indication means, the indication means being arranged to respond when any one of the sensors of the group detects an excess temperature.

Preferably the threshold temperature is 300°C to 400°C.

Preferably the monitoring unit also comprises means to indicate individual sensor malfunction.

It is preferable that the indication means is in the form of a plurality of light-emitting diodes and it is also preferable that the means to indicate temperature critical threshold is in the form of an audible alarm.

Preferably the individual temperature sensors are located substantially at the centre of the thatch material.

When the thatched roof abuts a chimney stack it is preferable that at least one temperature sensor is located close to the stack.

It should be appreciated that the temperature monitoring system may be used to detect temperature change within any material which has similar burning characteristics to thatch.

Preferably the temperature monitoring device is powered by batteries.

Alternatively the temperature monitoring device is powered by mains electricity.

According to a second aspect of the present invention there is provided a method of temperature monitoring within a thatched roof in which the temperature within a body of thatch is monitored at a plurality of locations by a sensor means and an indication means is activated by a signal from an associated temperature sensor when the temperature is above a critical value at any one of the locations.

By way of example only, a thatched roof temperature monitoring system in accordance with the present invention will now be described with reference to the accompanying drawings, in which:
Figure 1 is a section through A-A of Figure 2 showing the location of two temperature sensors within a thatched roof,
Figure 2 is a perspective view of the thatched roof of Figure 1,
Figure 3 is an illustration of the front panel of a monitor,
Figure 4 is a circuit diagram of the power supply and battery monitor, and
Figure 5 is a circuit diagram of the temperature monitoring device.

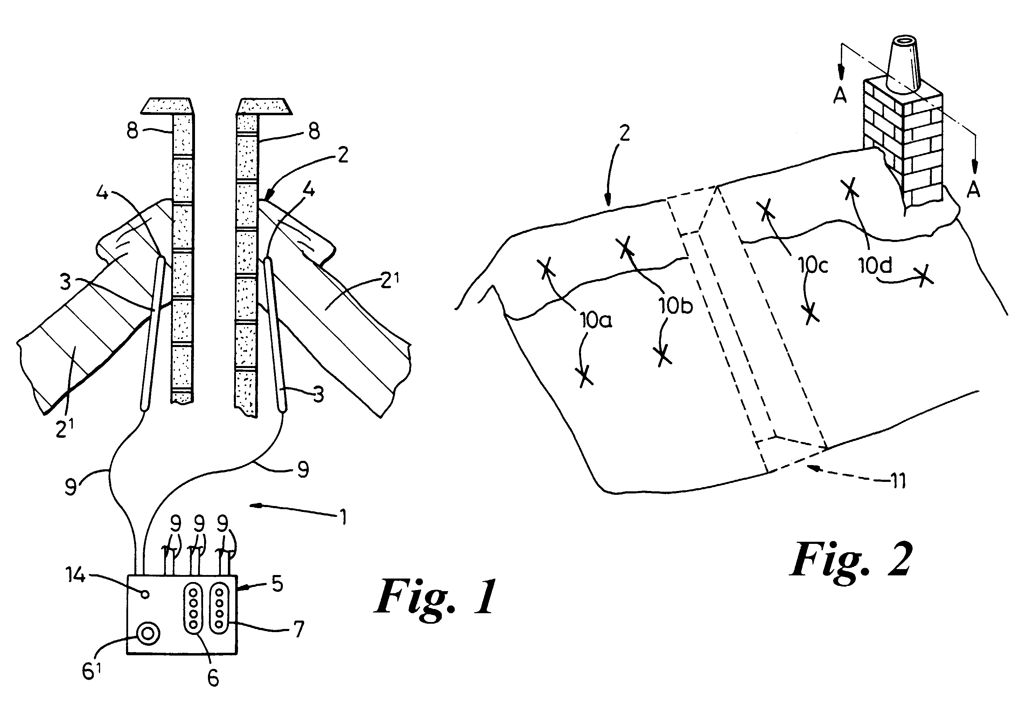

With particular reference to Figures 1 and 2, a temperature monitoring system 1 for a thatched roof 2 comprises a plurality of temperature sensors 3 located within the thatch 2¹. The sensor 3 comprises a tubular member having one end enclosed by a radial end section 4. The end section 4 encases a temperature sensitive resistor (not shown).

The sensors 3 are inserted through the lower surface of the thatched roof until the end 4 has reached the centre of the thatch. The sensor ends 4 are located about six inches from the chimney wall 8, as heat transferred from the chimney has been found to be the cause of a number of thatched roof fires.

The temperature monitoring system also comprises a monitoring unit 5 comprising an alarm indication means in the form of light-emitting diodes (LED) 6 and an audible alarm 6¹ and also a sensor malfunction indication means in the form of LEDs 7. The monitoring unit 5 has an electrical connection with the temperature sensitive resistors, which are located inside the sensor 3, via two wires 9. The monitoring unit 5 is located within the house.

Figure 2 shows the locations 10a, 10b, 10c and 10d of a plurality of sensors 3 forming four regions of the thatched roof. Each region has two sensors located in the thatch. The number of different regions will depend on the size of the roof and the required minimum size of each region.

When the temperature in the thatch rises above a predetermined value which may correspond to the start of a fire, the nearest sensor to the fire will detect the rise in temperature and the change in temperature will be monitored by the unit 5. When the detected temperature is greater than a predetermined value, for example 300°C to 400°C, the unit 5 will trigger the alarm 6¹ and light the LED 6 corresponding to the particular region or zone. The alarm may be local or communicated to a third party. Once the Fire Brigade has arrive the location of the fire can be established by referring to lit zone LED. The extent of the fire can also be estimated by the number of zone LEDs lit so indicating temperatures above the critical value.

After the information has been obtained from the monitoring unit 5 the Fire Brigade can isolate the fire by removing a section 11 of thatch as shown in Figure 2. This will provide a fire break so stopping the fire spreading to other regions. There is no need to remove the complete thatched roof to ensure the fire has been completely extinguished as sensors in the remaining part of the roof will indicate that the temperature is not above the critical temperature.

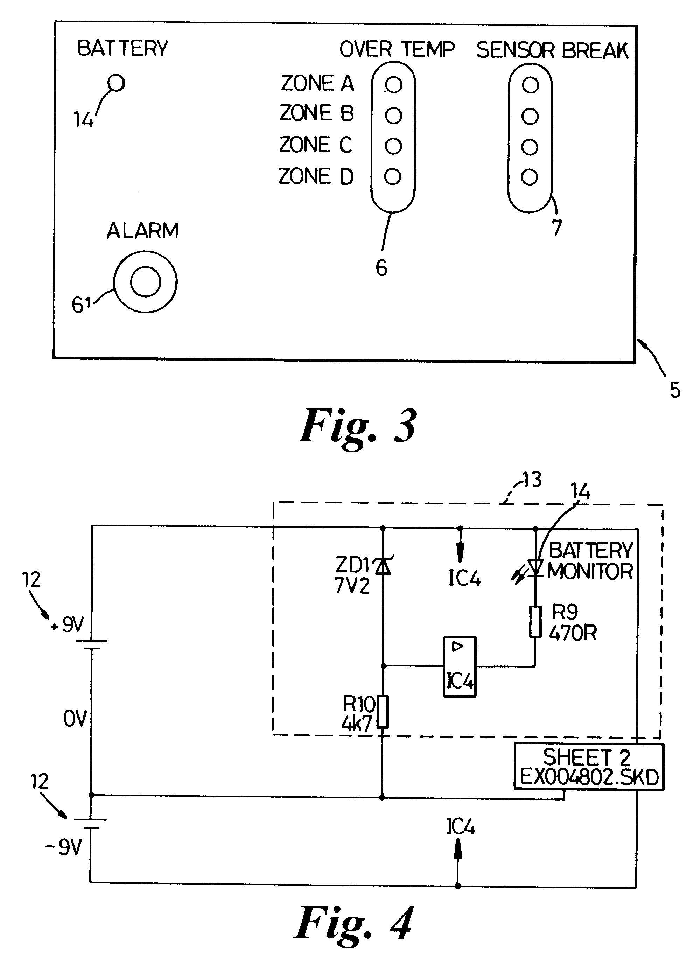

Figure 4 shows the circuit diagram for the power supply. Two 9-volt batteries 12 supply the power to the monitoring unit 5 and the sensors 3. The monitor unit 5 comprises circuitry 13 to detect and indicate when the battery's output is low. When the power output drops below a predetermined level the LED 14 will light.

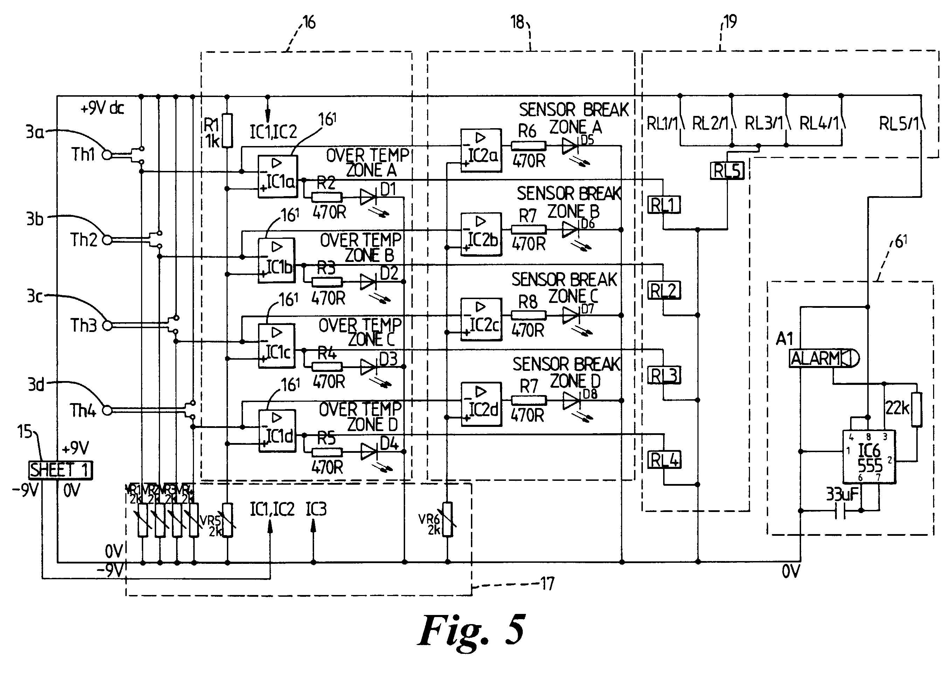

Figure 5 shows the circuit diagram for the monitoring system 1, comprising temperature zone indicating circuitry 16, malfunction indicating circuitry 18, switching circuitry 19 and alarm circuitry 6¹.

The power supply circuit diagram is represented by 15. The circuit comprises four sensors 3a, 3b, 3c, 3d, only one sensor for each zone 10a, 10b, 10c and 10d (reference Figure 2).

The circuitry 16 comprises the temperature zone indicating means comprising four quad op-amps 16¹. The circuitry 17 comprises variable resistors which are used to balance the monitoring unit and set the critical temperature level.

When a fire starts near a sensor 3 the rise in temperature will alter the resistance of the sensor. When the temperature is greater than the predetermined critical temperature the corresponding op-amps 16¹ will allow a current to flow and the corresponding indicating LED will light and a corresponding switch will close in a switching circuit 19. The closed switch in the switching circuit 19 will trigger the alarm 6¹.

The circuitry 18 comprises the malfunction indication means comprising four quad op-amps, four resistors and four LEDs. When a break occurs in any of the individual sensor circuits the corresponding op-amp will allow a current to flow so lighting a corresponding LED. The LED is displayed 7 on the front panel of monitoring unit 5 (reference Figure 3). The LED display 7 indicates which zone has the break.

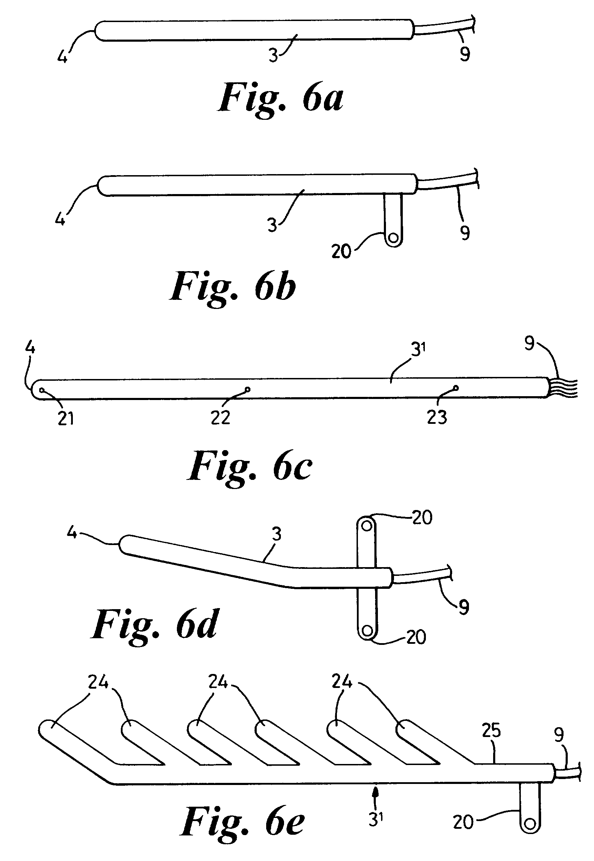

The same reference numerals have been used for Figures 6a to 6e for the similar items. The Figures 6a to 6e show different designs for the sensor 3.

Figure 6b shows a sensor 3 comprising a mounting bracket 20 to secure the sensor in the thatched roof. Figure 6c shows a multi-sensor 3¹ comprising a plurality of temperature sensitive resistors located inside the sensor at individual positions 21, 22, 23 along the length of the sensor 3¹. The multi-sensor 3¹ is used when there is a requirement to monitor the temperature at the upper surface of the thatch roof, in the centre of the thatched roof and at the lower surface of the thatch roof. This would be possible by placing the multi-sensor 3¹ so that 21 was near the upper surface, 22 was in the middle and 23 was near the lower surface of the thatched roof.

Figure 6e shows an embodiment of a multi-sensor 3¹. The individual temperature sensitive resistors are located within branching members 24. The branching members 24 extend perpendicularly from a main sensor member 25.

It will be appreciated that suitable fire resistance materials are used for the sensor construction.

It will also be appreciated that the predetermined critical temperature level may be set below the temperature required for combustion to indicate a potential fire hazard and help prevent combustion.

## Claims

1. A temperature monitoring system for a thatched roof characterised in that the temperature monitoring system comprises a plurality of temperature sensors 3 disposed at spaced-apart locations 10a, 10b, 10c, 10d of the thatch 2¹ and being linked to a monitoring unit 5 comprising respective indication means 6 to indicate the temperature change of a respective sensor or group of sensors, the indication means being activated by a signal from an associated temperature sensor 3.

2. A temperature monitoring system as claimed in claim 1 characterised in that the indication means 6 is activated when the respective sensor 3 detects a predetermined critical threshold temperature.

3. A temperature monitoring system as claimed in claim 2 characterised in that the threshold temperature is 300°C to 400°C.

4. A temperature monitoring system as claimed in any one of the preceding claims characterised in that the monitoring unit 5 comprises means 7 to indicate individual sensor malfunction.

5. A temperature monitoring system as claimed in claim 4 characterised in that the indication means 7 is in the form of a plurality of light-emitting diodes.

6. A temperature monitoring system as claimed in claim 4 or claim 5 characterised in that the means to indicate temperature critical threshold is in the form of an audible alarm 6¹.

7. A temperature monitoring system as claimed in any one of the preceding claims characterised in that the individual temperature sensors 3 are located substantially at the centre of the thatch material 2¹.

8. A temperature monitoring system as claimed in claim 7 characterised in that the thatched roof 2 abuts a chimney stack 8 and at least one of the temperature sensors 3 is located close to the stack 8.

9. A temperature monitoring system as claimed in any one of the preceding claims characterised in that the temperature monitoring system is powered by batteries.

10. A temperature monitoring system as claimed in any one of claims 1 to 8 characterised in that the temperature monitoring system is powered by mains electricity.

11. A method of temperature monitoring within a thatched roof characterised in that the temperature within a body of thatch 2¹ is monitored at a plurality of locations 10a, 10b, 10c, 10d by a sensor means and an indication means is activated by a signal from an associated temperature sensor 3 when the temperature is above a critical value at any one of the locations 10a, 10b, 10c, 10d.
